# EUROPÄISCHE PATENTANMELDUNG

(11) **EP 1 464 925 A1**
(43) Veröffentlichungstag der Anmeldung: **06.10.2004**
(21) Anmeldenummer: 03007475.1
(22) Anmeldetag: 05.04.2003
(51) Int. Cl.: G01D 5/48

(54) **Verfahren zur Herstellung einer Aktor-Vorrichtung**

(71) Anmelder: Festo AG & Co, 73734 Esslingen (DE)
(72) Erfinder: Kiessling, Albert, 71263 Weil der Stadt (DE); Reininger, Thomas, 73249 Wernau (DE)
(74) Vertreter: Bregenzer, Michael

(57) **Zusammenfassung**

Die Erfindung betrifft ein Verfahren zur Herstellung einer Aktor-Vorrichtung (11) sowie eine Aktor-Vorrichtung (11). Die Aktor-Vorrichtung (11) weist einen in einem Gehäuse (14) beweglich angeordneten, insbesondere fluidtechnisch antreibbaren Aktor (16) und eine Positionserfassungseinrichtung (13) auf, bei der mittels eines durch eine Stromquelle (27) bereitgestellten Erregerstromes (28) in einem magnetostriktiven, entlang einem Verfahrweg (25) des Aktors (16) angeordneten Wellenleiter (29) ein konzentrisches Magnetfeld (31) erzeugbar ist, das durch einen am Aktor (16) angeordneten Positionsmagneten (32) derart beeinflussbar ist, dass eine den Wellenleiter (29) verformende Ultraschallwelle (34) erzeugt wird, und bei der eine Messeinrichtung (39) zur Messung der Position des Positionsmagneten (32) anhand einer Laufzeitmessung der Ultraschallwelle (34) vorhanden ist.

## Beschreibung

Die Erfindung betrifft ein Verfahren zur Herstellung einer Aktor-Vorrichtung mit einem in einem Gehäuse beweglich angeordneten, insbesondere fluidtechnisch antreibbaren Aktor und mit einer Positionserfassungseinrichtung, bei der mittels eines durch eine Stromquelle bereitgestellten Erregerstromes in einem magnetostriktiven Wellenleiter zur Anordnung an einer Messstrecke entlang einem Verfahrweg des Aktors ein konzentrisches Magnetfeld erzeugbar ist, das durch einen am Aktor angeordneten Positionsmagneten derart beeinflussbar ist, dass eine den Wellenleiter verformende Ultraschallwelle erzeugt wird, und bei der eine Messeinrichtung zur Messung der Position des Positionsmagneten anhand einer Laufzeitmessung der Ultraschallwelle vorhanden ist. Die Erfindung betrifft ferner eine derartige Aktor-Vorrichtung.

Eine derartige Aktor-Vorrichtung ist beispielsweise aus der Patentanmeldung WO 93/15378 bekannt. Die Positionserfassungseinrichtung ist modular aufgebaut, so dass sie in die ansonsten vorgefertigte Aktor-Vorrichtung eingebracht werden kann. Die Aktor-Vorrichtung ist beispielsweise ein fluidtechnischer, pneumatischer oder elektromagnetischer Linearantrieb. Für unterschiedliche Messstreckenlängen, die mit dem Verfahrweg des Aktors, beispielsweise eines pneumatisch angetriebenen Kolbens, korrelieren, sind unterschiedlich ausgestaltete Positionserfassungsmodule erforderlich. Die Lagerhaltungskosten sind erheblich, die Flexibilität der Produktion gering.

Die Aktor-Vorrichtungen mit den modularen Positionserfassungseinrichtungen sind aufwendig und teuer.

Es ist daher die Aufgabe der Erfindung, ein vereinfachtes und kostengünstiges Verfahren zur Herstellung einer Aktor-Vorrichtung der eingangs genannten Art sowie eine einfach zu fertigende Aktor-Vorrichtung bereitzustellen.

Diese Aufgabe wird bei der Verfahren der eingangs genannten Art dadurch gelöst, dass der Wellenleiter und ein Rückleiter für den Rückfluss des Erregerstroms zu der Stromquelle in einem vorbestimmten, für unterschiedlich lange Messstrecken geeigneten Maß an einem Montageplatz bereitgestellt werden, an dem die Aktor-Vorrichtung montiert wird, und dass der Wellenleiter an dem Montageplatz auf eine für die Messstrecke der jeweils herzustellenden Aktor-Vorrichtung geeignete Länge abgelängt und mit dem Rückleiter elektrisch verbunden wird.

Bei der Aktor-Vorrichtung ist zur Lösung der Aufgabe vorgesehen, dass der Wellenleiter und/oder der Rückleiter zumindest teilweise unmittelbar, ohne ein separates Schutzrohr in einer entlang dem Verfahrweg des Aktors verlaufenden Nut und/oder Bohrung des Gehäuses der Aktor-Vorrichtung angeordnet sind. Die Aktor-Vorrichtung ist beispielsweise ein fluidtechnischer, z.B. pneumatischer, und/oder elektromagnetischer Linearantrieb oder Drehantrieb.

Bei dem Verfahren können unterschiedlich bemessene Aktor-Vorrichtungen, beispielsweise fluidtechnische Linear- oder Rotationsantriebe, mit Positionserfassungseinrichtungen ausgestattet werden. Die Positionserfassungseinrichtung ist für unterschiedliche Aktor-Vorrichtungen geeignet. Durch geeignetes Ablängen des Wellenleiters und/oder des Rückleiters findet die Anpassung an die jeweilige Messstrecke, üblicherweise den Verfahrweg des Aktors, am Montageplatz statt, beispielsweise in dem Gebäude, in dem die Aktor-Vorrichtungen montiert werden. Besonders bevorzugt ist es jedoch, dass der Montageplatz eine Fertigungsstation ist, an dem die Aktor-Vorrichtung montiert bzw. endmontiert wird. Die Aktor-Vorrichtung ist beispielsweise bis auf die Positionserfassungseinrichtung vormontiert. Die Positionserfassungseinrichtung wird an die Montagestation angeliefert. Dort wird der Wellenleiter, gegebenenfalls auch der Rückleiter, abgelängt und mit dem Rückleiter verbunden und anschließend an der Aktor-Vorrichtung angeordnet.

Bei der erfindungsgemäßen Aktor-Vorrichtung kann auf ein separates Schutzrohr verzichtet werden, in dem der Wellenleiter zum Schutz gegen unerwünschte Umwelteinflüsse angeordnet sein kann.

Vorteilhafte Ausgestaltungen der Erfindung ergeben sich aus den abhängigen Ansprüchen sowie aus der Beschreibung.

Zweckmäßigerweise sind bei der Bereitstellung am Montageplatz die zu verbindenden Enden des Rückleiters und des Wellenleiters offen. Die den zu verbindenden Enden des Rückleiters und/oder des Wellenleiters entgegengesetzten Enden sind vorteilhafterweise an der Messeinrichtung vormontiert. Sie können aber auch an der Stromquelle oder an einem die Stromquelle und die Messeinrichtung bildenden Bauteil vormontiert sein.

Zur elektrischen und/oder mechanischen Verbindung des Wellenleiters mit dem Rückleiter eignet sich beispielsweise Verschweißen oder Verlöten. Die beiden Leiter können auch mittels einer Buchse, beispielsweise einer Crimp-Buchse, miteinander verbunden werden. Eine derartige Buchse bildet zweckmäßigerweise einen Schwingungsdämpfer für die Ultraschallwelle. Durch die Buchse werden unerwünschte Reflektionen auf dem Wellenleiter vermieden.

Zweckmäßigerweise ist an einem von der Messeinrichtung entfernten Ende des Wellenleiters eine Schwingungsdämpfereinrichtung zur Dämpfung einer Ultraschallwelle angeordnet. Die Schwingungsdämpfereinrichtung kann man auch als mechanischen Sumpf bezeichnen. Jedenfalls verhindert die Schwingungsdämpfereinrichtung Reflektionen von Ultraschallwellen auf dem Wellenleiter. Die Schwingungsdämpfereinrichtung kann beispielsweise durch ein Stück Schrumpfschlauch, durch einen Klebertropfen, die vorgenannte Buchse zur elektrischen Verbindung von Wellenleiter und Rückleiter oder dergleichen gebildet werden. Auch das Eingießen des Endes des Wellenleiters, das schwingungsgedämpft werden soll, in eine Vergussmasse ist möglich. Das zu dämpfende Ende des Wellenleiters wird beispielsweise angerauht, um eine optimale mechanische Kopplung mit der Schwingungsdämpfereinrichtung, z.B. der Buchse, zu gewährleisten. Es ist auch möglich, die Schwingungsdämpfereinrichtung zumindest teilweise in einem Bereich des Wellenleiters anzuordnen, der dem Kontaktbereich mit den Rückleiter vorgelagert ist.

Zweckmäßigerweise wird der Wellenleiter derart schwingungsbeweglich am Gehäuse der Aktor-Vorrichtung angeordnet, dass sich die Ultraschallwelle möglichst ungehindert ausbreiten kann.

Der Wellenleiter und/oder der Rückleiter werden vorteilhafterweise zumindest teilweise in einer entlang dem Verfahrweg des Aktors verlaufenden Nut und/oder Bohrung des Gehäuses angeordnet. Eine derartige Bohrung oder Nut verläuft beispielsweise neben einer Zylinderkammer, in der ein pneumatisch antreibbarer Kolben längsbeweglich gelagert ist. Der Wellenleiter und/oder der Rückleiter werden zweckmäßigerweise in einem Schutzrohr angeordnet. Dieses Schutzrohr wird vorteilhaft entlang dem Verfahrweg des Aktors am Gehäuse der Aktor-Vorrichtung angeordnet.

Die Nut, die Bohrung, bzw. das Schutzrohr werden zweckmäßigerweise mit einer schwingungselastischen Masse vergossen, so dass sich die Ultraschallwelle im Wellenleiter ausbreiten kann.

Die Aktor-Vorrichtung enthält zweckmäßigerweise eine Meldeeinrichtung zur Meldung diskreter Positionswerte des Positionsmagneten. Die Meldeeinrichtung meldet Positionswerte in der Art von mehreren diskreten Positionssensoren oder Positionsschaltern, die bei bekannten Messsystemen entlang dem Verfahrweg des Aktors am Gehäuse der Aktor-Vorrichtung angeordnet sind. Die Messeinrichtung, die Stromquelle bzw. die Meldeeinrichtung sind vorzugsweise am Gehäuse der Aktor-Vorrichtung, insbesondere an einem Gehäusedeckel, angeordnet.

Zwar ist es bevorzugt, dass der Wellenleiter und/oder der Rückleiter sehr exakt abgelängt und am Gehäuse der Aktor-Vorrichtung angeordnet werden, so dass die von der Messeinrichtung ermittelbaren Werte möglichst genau sind. Etwaige Fertigungstoleranzen werden zweckmäßigerweise dadurch ausgeglichen, dass die Messeinrichtung auf eine mit der Länge des Verfahrwegs korrespondierenden Länge des Wellenleiters kalibriert wird. Die Messeinrichtung liefert somit exakte Messwerte.

Der Positionsmagnet ist zweckmäßigerweise quer zum Verfahrweg magnetisiert. Allerdings ist auch häufig der Fall anzutreffen, dass der Positionsmagnet in der Richtung des Verfahrwegs magnetisiert ist. Im Zusammenhang mit der Erfindung wurde herausgefunden, dass auch mit derartigen Positionsmagneten Positionsmesswerte ermittelbar sind, die eine Regelung der Aktorvorrichtung erlauben. Jedenfalls ist die Messgenauigkeit zur Ermittlung diskreter Positionsmesswerte ausreichend.

Der Wellenleiter wird zweckmäßigerweise durch einen Draht gebildet. Es ist aber auch möglich, dass der Wellenleiter durch einen Hohlleiter gebildet wird.

Zweckmäßigerweise ist eine Ausgabeeinrichtung zur Ausgabe kontinuierlicher Positionswerte des Positionsmagneten an der Aktor-Vorrichtung vorgesehen. Beispielsweise haben die Positionswerte einen linearen, mit der Verfahr-Stellung des Aktor korrelierenden Verlauf. Anhand der kontinuierlichen Positionswerte ist eine Regelung der Aktor-Vorrichtung möglich. Zweckmäßigerweise ist eine derartige Regelungsvorrichtung in der Aktor-Vorrichtung vorhanden.

Nachfolgend wird die Erfindung anhand von Ausführungsbeispielen unter Bezugnahme auf die Zeichnung näher erläutert. Es zeigen:

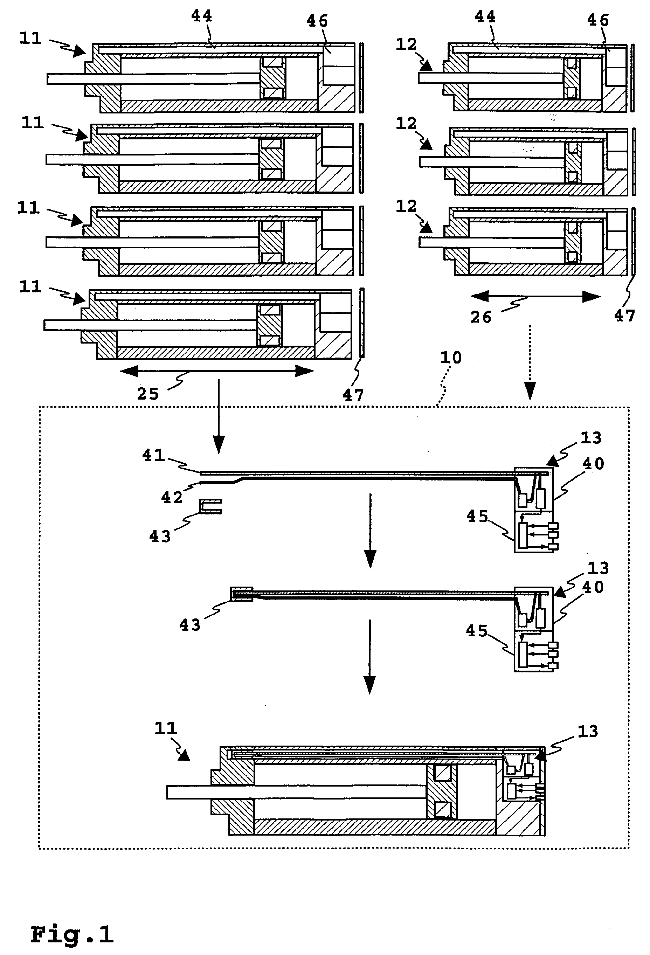

- Figur 1: eine schematische Darstellung des erfindungsgemäßen Verfahrens zur Herstellung von Aktor-Vorrichtungen an einem Montageplatz,
- Figur 2: eine Querschnittsansicht einer erfindungsgemäßen Aktor-Vorrichtung,
- Figur 3: eine schematische Darstellung der Funktionsweise einer Positionserfassungseinrichtung der Aktor-Vorrichtung gemäß Figur 2,
- Figur 4: von der Positionserfassungseinrichtung gemäß Figur 3 erzeugte, kontinuierlich verlaufende Positionswerte,
- Figur 5: von der Positionserfassungseinrichtung aus den kontinuierlichen Positionswerten gemäß Figur 4 erzeugte digitale Positionswerte,
- Figur 6: einen Aktor mit einem längs des Verfahrwegs magnetisierten Positionsmagneten sowie einem Flussleitstück,
- Figur 7: einen Aktor mit einem quer zum Verfahrweg magnetisierten Positionsmagneten, und
- Figur 8: eine Querschnittsansicht einer Kontaktklemmenanordnung zur Verbindung eines Wellenleiters und eines Rückleiter einer erfindungsgemäß gefertigten Positionserfassungseinrichtung.

An einem Montageplatz 10, beispielsweise einer Montagestation, werden Pneumatikzylinder 11, 12, also fluidtechnische Aktor-Vorrichtungen, montiert. An dem Montageplatz 10 könnten prinzipiell auch elektromagnetische Aktor-Vorrichtungen montiert werden. Die Pneumatikzylinder 11, 12 sind Linearantriebe. Es könnten aber auch Drehantriebe am Montageplatz 10 in der nachfolgend beschriebenen Weise erfindungsgemäß mit Positionserfassungseinrichtungen 13 ausgerüstet werden.

Die Zylinder 11, 12 weisen prinzipiell denselben Aufbau auf. Sie unterscheiden sich lediglich durch den Verfahrweg ihrer jeweiligen Aktoren. Nachfolgend sind daher gleiche oder funktional gleiche Komponenten der Zylinder 11, 12 mit denselben Bezugszeichen versehen.

In einem Gehäuse 14 mit einem länglichen Gehäuseraum 15 ist ein von einem Kolben gebildeter Aktor 16 axial bewegbar geführt. An dem Aktor 16 ist ein beim Ausführungsbeispiel von einer Kolbenstange gebildetes stangenförmiges Übertragungselement 17 fest angeordnet, das den Gehäuseraum 15 in Längsrichtung, koaxial durchzieht. Das Übertragungselement 17 durchdringt eine Gehäuse-Stirnwand 18. Das Übertragungselement 17 bildet beispielsweise einen Kraftabgriff.

Der Aktor 16 unterteilt den Gehäuseraum 15 in Arbeitsräume 19, 20, die mit Fluid-Kanälen 21, 22 an der Stirnwand 18 bzw. an einer Stirnwand 23 korrespondieren. Die Stirnwand 23 ist an der der Stirnwand 18 entgegengesetzten Seite des Gehäuseraums 15 angeordnet und verschließt diesen stirnseitig. Man kann die Stirnwand 18 auch als Lagerdeckel, die Stirnwand 23 als Abschlussdeckel bezeichnen. Durch die Kanäle 21, 22 kann Druckmittel, beispielsweise Druckluft, in die Arbeitsräume 19, 20 einströmen oder aus diesen ausströmen, wobei der Aktor 16 in Richtung einer Längsachse 24 des Gehäuses 14 hin und her bewegt wird. Die Innenkontur des Gehäuseraums 15 ist beispielsweise kreisförmig, rechteckig oder weist eine sonstige Querschnittsform auf. Die Zylinder 11, 12 könnten prinzipiell auch kolbenstangenlos ausgebildet sein.

Beim Zylinder 11 ist der Aktor 16 entlang eines längeren Verfahrwegs 25, beim Zylinder 12 entlang eines kürzeren Verfahrwegs 26 entlang der Längsachse 24 verfahrbar.

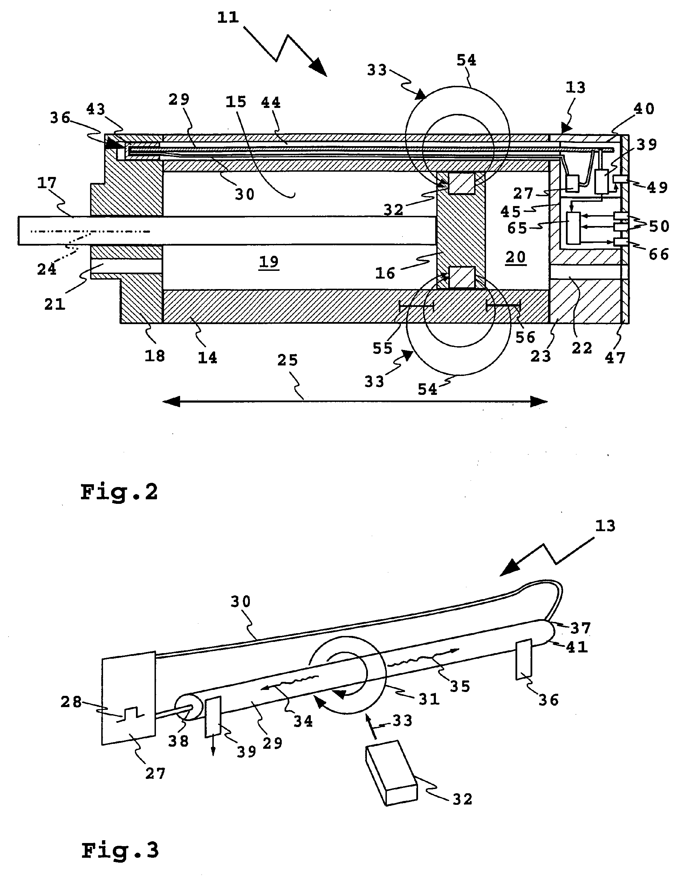

Zur Erfassung der jeweiligen Position der Aktoren 16 an den Verfahrwegen 24, 25 ist die insgesamt mit der Bezugsziffer 13 bezeichnete Positionserfassungseinrichtung 13 vorgesehen, deren prinzipielle Funktionsweise insbesondere aus Figur 3 hervorgeht. Die von der Positionserfassungseinrichtung 13 zu überwachenden Messstrecken entsprechen den Verfahrwegen 24, 25.

Mit Hilfe einer Stromquelle 27 wird ein beispielsweise impulsförmiger Erregerstrom 28 erzeugt. Der Erregerstrom 28 fließt von der Stromquelle 27 über einen magnetostriktiven Wellenleiter 29 und von dessen Ende 41, an dem der Wellenleiter 29 an einer Verbindungsstelle 37 mit einem Rückleiter 30 verbunden ist, über den Rückleiter 30 zurück zur Stromquelle 27. Der Wellenleiter 29 ist beispielsweise ferromagnetisch. Der Wellenleiter 29 ist am Gehäuse 14 entlang den Verfahrwegen 25, 26 der Aktoren 16 angeordnet.

Durch den Erregerstrom 28 wird in dem Wellenleiter 29 ein zirkulares Magnetfeld 31 erzeugt. Ein Magnetfeld 33 eines Positionsmagneten 32, der am Aktor 16 angeordnet ist, beeinflusst das Magnetfeld 31, stört das Magnetfeld 31 sozusagen. Es findet gemäß des Wiedemann-Effektes eine elastische, torsionale Verformung des Wellenleiters 29 statt, wodurch Ultraschallwellen 34, 35 erzeugt werden. Die Ultraschallwellen 34, 35 sind Körper-Ultraschallwellen, die sich von ihrem Entstehungsort, der Position des Magneten 32, in Richtung der beiden Enden des Wellenleiters 29 ausbreiten. Die Ultraschallwelle 35 wird durch eine Schwingungsdämpfungseinrichtung 36 absorbiert, die nahe dem Ende 41 des Wellenleiters 29 angeordnet ist. Die Ultraschallwelle 34 hingegen breitet sich zu dem dem Ende 41 entgegengesetzten Ende 38 des Wellenleiters 29 aus. Am Ende 38 ist eine Messeinrichtung 39 zur Messung der Position des Positionsmagneten 32 angeordnet. Die Messeinrichtung 39 enthält beispielsweise einen magnetostriktiven Metallstreifen, eine induktive Detektionsspule und einen Permanentmagneten. Die Messeinrichtung 39 bildet eine Art Torsionsimpulswandler und misst die Laufzeit der Ultraschallwelle 34 vom Entstehungsort, der Position des Positionsmagneten 32 zum Ende 38. Dabei wird berücksichtigt, dass die Laufzeit des Erregerstrom-Impulses 28 von der Stromquelle 27 zur Position des Positionsmagneten 32 aufgrund der Lichtgeschwindigkeit des Stromes gegenüber der Ausbreitungszeit der Ultraschallwelle 34 vernachlässigbar gering ist. Jedenfalls lässt sich anhand der Laufzeit der Ultraschallwelle 34 die Position des Positionsmagneten 32 und somit die Position des Aktors 16 entlang der Verfahrwege 25, 26 ermitteln.

Die Pneumatikzylinder 11, 12 werden beim Ausführungsbeispiel weitgehend vormontiert an den Montageplatz 10 angeliefert. Prinzipiell könnten die Zylinder 11, 12 aber auch in noch weniger montiertem Zustand am Montageplatz 10 ankommen. Jedenfalls werden die Zylinder 11, 12 am Montageplatz 10 mit Positionserfassungseinrichtungen 13 ausgestattet.

Die Positionserfassungseinrichtungen 13 sind universell sowohl an die Pneumatikzylinder 11 als auch an die Pneumatikzylinder 12 sowie an in der Figur nicht dargestellte Pneumatikzylinder oder sonstige Aktor-Vorrichtungen anpassbar und an diesen anordenbar. Der Wellenleiter 29 und der Rückleiter 30 sind an einem Messmodul 40 der Positionserfassungseinrichtungen 13 vormontiert. Das Messmodul 40 enthält die Stromquelle 27 sowie die Messeinrichtung 39, die in entsprechender Weise mit dem Wellenleiter 29 sowie der Rückleiter 30 elektrisch und/oder mechanisch verbunden sind. Die von dem Messmodul 40 entfernten Enden 41, 42 des Wellenleiters 29 sowie des Rückleiters 30 sind bei der Anlieferung der Positionserfassungseinrichtung 13 am Montageplatz 10 zunächst offen. Die beiden Enden 41, 42 sind elektrisch miteinander zu verbinden, so dass der Erregerstrom 28 vom Wellenleiter 29 zum Rückleiter 30 fließen kann. Zudem sind der Wellenleiter 29 und der Rückleiter 30 vor der Montage an den Zylindern 11, 12 an die unterschiedlich langen Verfahrwege 25, 26 der Zylinder 11, 12, also unterschiedlich lange Messstrecken, anzupassen.

Die Leiter 29, 30 werden zunächst auf eine geeignete Länge abgelängt, beispielsweise mit Hilfe eines geeigneten Schneidwerkzeuges, mittels Laserschneidens oder dergleichen. Sodann werden die beiden Enden 41, 42 in eine Buchse 43 eingeführt. Die Buchse 43 wird beispielsweise mittels einer Crimp-Zange gequetscht, so dass die Leiter 29, 30 elektrisch zuverlässig miteinander verbunden sind. Prinzipiell könnten die beiden Enden 41, 42 auch durch Verlöten, Verschweißen oder dergleichen elektrisch miteinander verbunden werden. Es ist auch möglich, das Ende 41 des Wellenleiters 29 vor dem Einbringen in die Buchse 43 außenseitig anzurauhen, um auf diese Weise einen mechanisch verbesserten Kraftschluss beider Komponenten zu erzielen.

Die abgelängten Leiter 29, 30 sowie die Buchse 43 werden sodann in eine Bohrung 44 eingeführt, die entlang der Verfahrwege 25, 26 im Gehäuse 14 verläuft und in der Stirnwand 18 endet. Im montierten Zustand kommt die Buchse 43 in der Stirnwand 18 zu liegen und wird von dieser gehalten. Die Buchse 43 wirkt als Schwingungsdämpfungseinrichtung 36. Ansonsten liegt der Wellenleiter 29 schwingungsbeweglich in der Bohrung 44, so dass sich die Ultraschallwellen 34, 35 in ihm ausbreiten können. Es ist möglich, die Bohrung 44 mit einer schwingungselastischen Masse auszugießen. Es ist prinzipiell auch möglich, die Bohrung 44 lediglich im Bereich der Buchse 43, beispielsweise nur im Bereich der Stirnwand 18 mit einer derartigen Füllmasse zu vergießen. Ferner kann prinzipiell an jeder Stelle, vorzugsweise jedoch im Bereich der Buchse 43 ein Klebertropfen oder dergleichen zur Schwingungsdämpfung angeordnet sein.

Zur Aufnahme des Messmoduls 40 sowie eines Meldemoduls 45 an der Stirnwand 23, dem Abschlussdeckel des Zylinder 11, 12, ist ein Aufnahmeraum 46 vorgesehen. Der Aufnahmeraum 46 ist stirnseitig durch einen Deckel 47 verschlossen.

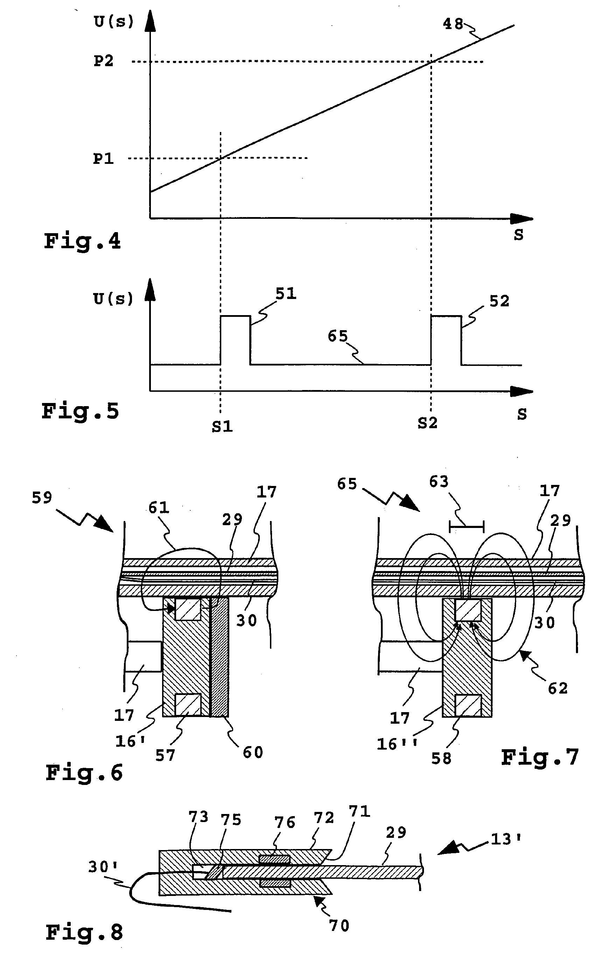

Die Messeinrichtung 39 erzeugt ein mit der Position des Positionsmagneten 32 und somit der Position des Aktors 16 korrelierendes kontinuierliches Positionssignal 48. Das Positionssignal 48 hat beispielsweise einen linearen Verlauf, wie in Figur 4 dargestellt. Die Messeinrichtung 39 wird auf die jeweilige Länge des Wellenleiters 30, die mit den Verfahrwegen 25, 26 korreliert, kalibriert, so dass das Positionssignal 48 den in Figur 4 idealisiert dargestellten Verlauf aufweist. Das Positionssignal 48 kann beispielsweise an Kontaktmitteln 49, z.B. einer Messbuchse, als ein analoges Positionssignal abgegriffen werden. Es ist aber auch möglich, dass die Messeinrichtung 39 an einen Bus, z.B. einen Feldbus, ankoppelbar ist, über den Nachrichten mit Positionswerten, die aus dem Positionssignal 48 erzeugbar sind, versendet werden.

Das Messmodul 40 und das Meldemodul 45 sind elektrisch miteinander verbunden. Das Messmodul 40 übermittelt das Positionssignal 48 an das Meldemodul 45. Das Meldemodul 45 hat eine Lern-Funktion (engl. Teach-Function). Bei dem Meldemodul 45 können mittels Tastschaltern 50 oder sonstigen Eingabemitteln Schwellwerte P1, P2 des Positionssignals 48 an Positionen S1 und S2 entlang der Verfahrwege 24, 25 definiert werden, bei denen das Meldemodul 45 digitale Positionswerte 51, 52, beispielsweise Ausgabeimpulse, ausgibt. Eine Auswerteeinrichtung 64 des Meldemoduls 44 analysiert das Positionssignal 48 gemäß von an den Tastschaltern 50 vorbestimmten Schwellwerten P1, P2 und generiert ein digitales Ausgangssignal 53, das die Positionswerte 51, 52 enthält. Das digitale Ausgangssignal 53 steht an einer Buchse 66 oder einem sonstigen elektrischen und/oder optischen Kontaktmittel bereit. Somit bietet das Meldemodul 45 eine Funktionalität, die beispielsweise von Zylinderschaltern bekannt ist. Derartige Zylinderschalter könnten einzelne Sensor-Schalter sein, beispielsweise Reed-Kontakte, die außenseitig am Gehäuse 14 oder einem sonstigen Gehäuse eines Antriebs angeordnet sind und durch den Positionsmagneten 32 aktivierbar sind. Es versteht sich, dass zusätzlich zu der Positionserfassungseinrichtung 13 auch derartige Zylinderschalter am Gehäuse 14 angeordnet sein könnten, beispielsweise um höhere Spannungen von z.B. 220 Volt oder dergleichen zu schalten.

Wenn der Aktor 16 und damit auch der Positionsmagnet 32 Positionen S1 und S2 entlang des Verfahrweges 25, beim Zylinder 12 entlang des Verfahrwegs 26, passiert, gibt das Meldemodul 45 das in Figur 5 gezeigte digitale Ausgangssignal 53 aus. Bei dem Ausgangssignal 53 sind die Positionswerte 51, 52 beispielsweise Strom- oder Spannungspulse mit einer vorbestimmten Dauer. Das Positionssignal 48 und die Positionswerte 51, 52 werden beispielsweise als von einem entlang der Verfahrwege 25, 26 zurückgelegten Weg S abhängige Spannungswerte U(s) ausgegeben.

Der in Figur 2 dargestellte Positionsmagnet 32 ist ein Ringmagnet, der am Außenumfang des Aktors 16 angeordnet ist. Der Positionsmagnet 32 weist eine bei Positionsmagneten von Pneumatikzylindern häufig anzutreffende Magnetisierung auf, bei der die Magnetfeldlinien im wesentlichen entlang des Verfahrwegs des Aktors, im Beispiel in Richtung der Längsachse 24, aus dem Positionsmagneten austreten bzw. wieder in diesen eintreten. Der Feldlinienverlauf 54 des Magnetfeldes 33 ist in Figur 2 eingezeichnet. Die Feldlinien 54 durchdringen das Gehäuse 14 und somit auch den Wellenleiter 29 in Bereichen 55, 56 in radialer Richtung, was letztlich zu zwei voneinander unabhängigen, unmittelbar nacheinander in Richtung der Messeinrichtung 39 verlaufenden Ultraschallwellen in der Art der Ultraschallwelle 34 führt. Die beiden Bereiche 55, 56 sind in Längsbewegungsrichtung des Aktors 16 zueinander beabstandet. Im Zusammenhang mit der Erfindung wurde erkannt, dass dennoch ein Positionssignal in der Qualität des Positionssignals 48 erzielbar ist, das auch zur Positionsregelung des Pneumatikzylinders 11 geeignet ist. Gegebenenfalls kann die Messeinrichtung 39 derart ausgestaltet sein, dass sie die empfangenen Ultraschallwellen filtert. Beispielsweise könnte die Messeinrichtung 39 nur die zuerst empfangene Ultraschallwelle auswerten und aus dieser die Position des Aktors 16 ermitteln. Es ist auch möglich, dass die Messeinrichtung jeweils zwei hintereinander empfangene Ultraschallwellen auswertet und einen Mittelwert aus den ermittelten Laufzeiten der Ultraschallwellen bildet.

Präzisere Signale gewinnt man dadurch, dass die Feldlinien des durch einen Positionsmagneten erzeugten Magnetfeldes den Wellenleiter zumindest schwerpunktmäßig nur in einem eng begrenzten Bereich in Längsbewegungsrichtung des jeweiligen Positionsmagneten queren. Dies ist bei den Positionsmagneten 57, 58 gemäß Figuren 6 und 7 der Fall.

Figur 6 zeigt eine Teilansicht eines Pneumatikzylinders 59, der im wesentlichen dem Pneumatikzylinder 11 gleicht. Soweit sich die Komponenten der Pneumatikzylinder 59 und 11 gleichen, sind dieselben Bezugszeichen verwendet. An dem Aktor 16' des Zylinders 59 ist stirnseitig ein Flussleitstück 60, beispielsweise aus weichmagnetischem Material, angeordnet, das die Feldlinien des Positionsmagneten 57 aus der Längsrichtung, aus der sie aus dem Magneten 57 austreten, radial umlenken, so dass sie den Wellenleiter 29 nahe beim Magneten 57 radial queren. Im Ausführungsbeispiel ist nur eine der Feldlinien 61 eingezeichnet.

Der Positionsmagnet 58 eines Pneumatikzylinders 65 gemäß Figur 7 ist radial magnetisiert. Der Positionsmagnet 58 ist somit quer zum Verfahrweg 25 magnetisiert, so dass die Feldlinien 62 in radialer Richtung aus dem Positionsmagnet 58 austreten bzw. wieder in diesen zurückkehren. Somit ergibt sich ein relativ eng begrenzter Bereich 63, in dem das Magnetfeld des Positionsmagneten 58 in radialer Richtung ein Maximum aufweist, so dass die Position des Positionsmagneten 58 und somit die Position eines Aktors 16' ', an dem der Positionsmagnet 58 angeordnet ist, durch die Positionserfassungseinrichtung 13 präzise ermittelbar ist.

Bei der in Figur 8 gezeigten Anordnung ist der Wellenleiter 29 mittels einer Kontaktklemmenanordnung 70 mit einem Rückleiter 30' einer Positionserfassungseinrichtung 13' verbunden, die im wesentlichen der Positionserfassungseinrichtung 13 entspricht. Der Rückleiter 30' wird im Unterschied zum Rückleiter 30 nicht in der Bohrung 44 angeordnet, sondern ist beispielsweise am Gehäuse 14 vormontiert. Der Rückleiter 30' kann einen integralen Bestandteil des Gehäuses 14 bilden.

Die Kontaktklemmenanordnung 70 könnte beispielsweise am Ende der Bohrung 44, etwa an der Stelle der Buchse 43 angeordnet sein. Vorzugsweise ist die Kontaktklemmenanordnung 70 in der Gehäuse-Stirnwand 18, z.B. einem Gehäusedeckel, angeordnet. Der Wellenleiter 29 wird am Montageplatz 10 entsprechend der Länge der Verfahrwege 25 oder 26 abgelängt. Sodann wird der Wellenleiter 29 in die Bohrung 44 eingeführt, bis er auf eine z.B. konische Führungsaufnahmeöffnung 71 der Kontaktklemmenanordnung 70 trifft. Durch die Führungsaufnahmeöffnung 71 wird der Wellenleiter 29 in einen beispielsweise länglichen Aufnahmeraum 73 eines Gehäuses 72 der Kontaktklemmenanordnung 70 eingeführt. Die Führungsaufnahmeöffnung 71 ist stirnseitig am Gehäuse 72 der Kontaktklemmenanordnung 70 angeordnet, das z.B. aus Kunststoff besteht. Am der Führungsaufnahmeöffnung 71 entgegengesetzten Ende 74 des Aufnahmeraums 73 tritt der Wellenleiter 29 mit einer Kontaktklemme 75 in elektrischen Kontakt, die elektrisch mit dem Rückleiter 30' verbunden ist. Die Kontaktklemmenanordnung 70 ist z.B. durch eine geeignete Ausgestaltung der Kontaktklemme 75 vorzugsweise selbsthemmend, so dass der einmal in die Kontaktklemmenanordnung 70 eingeführte Wellenleiter 29 von dieser gehalten wird und nicht ohne besondere Kraftanstrengung aus dieser herausgezogen werden kann.

Eine Schwingungsdämpfungseinrichtung 76 ist der Kontaktklemme 75 vorgelagert am Aufnahmeraum 73 angeordnet. Die Schwingungsdämpfungseinrichtung 76 ist zwischen der Führungsaufnahmeöffnung 71 und der Kontaktklemme 75 angeordnet. Die Schwingungsdämpfungseinrichtung 76 enthält beispielsweise ein ringförmiges Kunststoffteil, das im montierten Zustand den Wellenleiter 29 umgibt, an diesem vorzugsweise flächig anliegt und als akustischer Absorber für die Ultraschallwellen 35 dienen kann. Die Schwingungsdämpfungseinrichtung 76 kann zur Selbsthemmungswirkung der Kontaktklemmenanordnung 70 beitragen oder diese vollständig bereitstellen.

Es versteht sich, dass die Kontaktklemmenanordnung 70 auch zur Aufnahme eines Rückleiters ausgestaltet sein könnte, der in der Art des Rückleiters 30 abzulängen und am Gehäuse 14 zu montieren wäre. Für den zunächst noch losen Rückleiter wäre dann ebenfalls eine Führungsaufnahmeöffnung, sozusagen ein Führungsloch, an der Kontaktklemmenanordnung vorgesehen, in das der Rückleiter einzuführen wäre, um mit einer Kontaktklemme am Ende des Aufnahmeraums in Verbindung zu treten, die mit der Kontaktklemme 75 elektrisch verbunden ist.

Die Schwingungsdämpfungseinrichtung 76 könnte auch außerhalb der Kontaktklemmenanordnung 70, z.B. am Gehäuse 14, angeordnet sein.

Der Rückleiter wird zweckmäßigerweise an den erfindungsgemäßen Schwingungsdämpfungseinrichtungen, z.B. der Schwingungsdämpfungseinrichtung 76, vorbei geführt.

## Patentansprüche

1. Verfahren zur Herstellung einer Aktor-Vorrichtung (11, 12) mit einem in einem Gehäuse (14) beweglich angeordneten, insbesondere fluidtechnisch antreibbaren Aktor (16; 16'; 16'') und mit einer Positionserfassungseinrichtung (13), bei der mittels eines durch eine Stromquelle (27) bereitgestellten Erregerstromes (28) in einem magnetostriktiven Wellenleiter (29) zur Anordnung an einer Messstrecke entlang einem Verfahrweg (25, 26) des Aktors (16; 16'; 16' ') ein konzentrisches Magnetfeld (31) erzeugbar ist, das durch einen am Aktor (16; 16'; 16' ') angeordneten Positionsmagneten (32; 57; 58) derart beeinflussbar ist, dass eine den Wellenleiter (29) verformende Ultraschallwelle (34) erzeugt'wird, und bei der eine Messeinrichtung (39) zur Messung der Position des Positionsmagneten (32; 57; 58) anhand einer Laufzeitmessung der Ultraschallwelle (34) vorhanden ist, **dadurch gekennzeichnet, dass** der Wellenleiter (29) und ein Rückleiter (30) für den Rückfluss des Erregerstroms (28) zu der Stromquelle (27) in einem vorbestimmten, für unterschiedlich lange Messstrecken geeigneten Maß an einem Montageplatz (10) bereitgestellt werden, an dem die Aktor-Vorrichtung (11, 12) montiert wird, und dass der Wellenleiter (29) an dem Montageplatz (10) auf eine für die Messstrecke der jeweils herzustellenden Aktor-Vorrichtung (11, 12) geeignete Länge abgelängt und mit dem Rückleiter (30) elektrisch verbunden wird.

2. Verfahren nach Anspruch 1, **dadurch gekennzeichnet, dass** bei der Bereitstellung am Montageplatz (10) die zu verbindenden Enden (41, 42) des Wellenleiters (29) und des Rückleiters (30) offen sind.

3. Verfahren nach Anspruch 1 oder 2, **dadurch gekennzeichnet, dass** bei der Bereitstellung am Montageplatz (10) die den zu verbindenden Enden (41, 42) des Wellenleiters (29) und des Rückleiters (30) entgegengesetzten Enden des Wellenleiters (29) und/oder des Rückleiters (30) an der Messeinrichtung (39) und/oder Stromquelle (27) vormontiert sind.

4. Verfahren nach einem der vorhergehenden Ansprüche, **dadurch gekennzeichnet, dass** der Wellenleiter (29) mit dem Rückleiter (30) verschweißt und/oder verlötet und/oder mittels einer Buchse (43) und/oder mit einer Kontaktklemmenanordnung (70) verbunden wird.

5. Verfahren nach Anspruch 4, **dadurch gekennzeichnet, dass** die Buchse (43) als Schwingungsdämpfer für die Ultraschallwelle (34) ausgestaltet wird.

6. Verfahren nach einem der vorhergehenden Ansprüche, **dadurch gekennzeichnet, dass** an einem von der Messeinrichtung (39) entfernten Ende (41) des Wellenleiters (29) eine Schwingungsdämpfereinrichtung (36) zur Dämpfung der Ultraschallwelle (34) angeordnet wird.

7. Verfahren nach einem der vorhergehenden Ansprüche, **dadurch gekennzeichnet, dass** zur Schwingungsdämpfung ein Tropfen einer Klebemasse an dem Wellenleiter (29) angebracht wird.

8. Verfahren nach einem der vorhergehenden Ansprüche, **dadurch gekennzeichnet, dass** der Wellenleiter (29) derart schwingungsbeweglich am Gehäuse (14) der Aktor-Vorrichtung (11, 12) angeordnet wird, dass sich die Ultraschallwelle (34) ausbreiten kann.

9. Verfahren nach einem der vorhergehenden Ansprüche, **dadurch gekennzeichnet, dass** der Wellenleiter (29) und/oder der Rückleiter (30) zumindest teilweise in einer entlang dem Verfahrweg (25, 26) des Aktors (16; 16'; 16' ') verlaufenden Nut und/oder Bohrung (44) des Gehäuses (14) der Aktor-Vorrichtung (11, 12) angeordnet werden.

10. Verfahren nach einem der vorhergehenden Ansprüche, **dadurch gekennzeichnet, dass** der Wellenleiter (29) und/oder der Rückleiter (30) in einem Schutzrohr angeordnet werden, und dass das Schutzrohr entlang dem Verfahrweg (25, 26) des Aktors (16; 16'; 16' ') am Gehäuse (14) der Aktor-Vorrichtung (11, 12) angeordnet wird.

11. Verfahren nach Anspruch 9 oder 10, **dadurch gekennzeichnet, dass** die Nut und/oder die Bohrung (44) und/oder das Schutzrohr mit einer schwingungselastischen Masse vergossen werden.

12. Verfahren nach einem der vorhergehenden Ansprüche, **dadurch gekennzeichnet, dass** die Messeinrichtung (39) und/oder die Stromquelle (27) und/oder eine Meldeeinrichtung zur Meldung diskreter Positionswerte des Positionsmagneten (32; 57; 58) an der Aktor-Vorrichtung (11, 12), insbesondere an einem Gehäusedeckel (23) der Aktor-Vorrichtung (11, 12), angeordnet werden.

13. Verfahren nach einem der vorhergehenden Ansprüche, **dadurch gekennzeichnet, dass** die Messeinrichtung (39) auf eine mit der Länge des Verfahrwegs (25, 26) korrespondierende Länge des Wellenleiters (29) kalibriert wird.

14. Aktor-Vorrichtung (11, 12) mit einem in einem Gehäuse (14) beweglich angeordneten, insbesondere fluidtechnisch antreibbaren Aktor (16; 16'; 16'') und mit einer Positionserfassungseinrichtung (13), bei der mittels eines durch eine Stromquelle (27) bereitgestellten Erregerstromes (28) in einem magnetostriktiven, entlang einem Verfahrweg (25, 26) des Aktors (16; 16'; 16' ') angeordneten Wellenleiter (29) ein konzentrisches Magnetfeld (31) erzeugbar ist, das durch einen am Aktor (16; 16'; 16'') angeordneten Positionsmagneten (32; 57; 58) derart beeinflussbar ist, dass eine den Wellenleiter (29) verformende Ultraschallwelle (34) erzeugt wird, und bei der eine Messeinrichtung (39) zur Messung der Position des Positionsmagneten (32; 57; 58) anhand einer Laufzeitmessung der Ultraschallwelle (34) vorhanden ist, **dadurch gekennzeichnet, dass** der Wellenleiter (29) und/oder der Rückleiter (30) zumindest teilweise unmittelbar, ohne ein separates Schutzrohr in einer entlang dem Verfahrweg (25, 26) des Aktors (16; 16'; 16' ') verlaufenden Nut und/oder Bohrung des Gehäuses (14) der Aktor-Vorrichtung (11, 12) angeordnet sind.

15. Aktor-Vorrichtung (11, 12) nach Anspruch 14, **dadurch gekennzeichnet, dass** der Positionsmagnet (58) quer zum Verfahrweg (25, 26) magnetisiert ist und/oder der Wellenleiter (29) durch einen Draht gebildet wird.

16. Aktor-Vorrichtung (11, 12) nach Anspruch 14 oder 15, **dadurch gekennzeichnet, dass** der Wellenleiter (29) mit dem Rückleiter (30) verschweißt und/oder verlötet und/oder mittels einer Buchse (43) verbunden ist.

17. Aktor-Vorrichtung (11, 12) nach einem der Ansprüche 14 bis 16, **dadurch gekennzeichnet, dass** die Buchse (43) einen Bestandteil einer Schwingungsdämpfungseinrichtung (36) bildet.

18. Aktor-Vorrichtung (11, 12) nach einem der Ansprüche 14 bis 17, **dadurch gekennzeichnet, dass** er eine Meldeeinrichtung zur Meldung diskreter Positionswerte (51, 52) des Positionsmagneten (32; 57; 58) aufweist.

19. Aktor-Vorrichtung nach einem der Ansprüche 14 bis 18, **dadurch gekennzeichnet, dass** eine Ausgabeeinrichtung (49) zur Ausgabe von im wesentlichen kontinuierlichen Positionswerten (48) des Positionsmagneten (32; 57; 58) aufweist.
